# EUROPEAN PATENT APPLICATION

(11) **EP 4 582 228 A1**
(43) Date of publication of application: **09.07.2025**
(21) Application number: 23859943.5
(22) Date of filing: 01.08.2023
(51) Int. Cl.: B25J 15/08, G01L 5/16

(54) **END EFFECTOR, END EFFECTOR CONTROL DEVICE, AND METHOD FOR CONTROLLING GRIPPER**

(30) Priority: 31.08.2022 JP 2022138229
(71) Applicant: OSAKA UNIVERSITY, Suita-shi Osaka 565-0871 (JP)
(72) Inventor: KOYAMA, Keisuke, Suita-shi, Osaka 565-0871 (JP)
(74) Representative: Alpspitz IP
(86) International application number: PCT/JP2023/028114
(87) International publication number: WO 2024/048174

(57) **Abstract**

[Problem] The present invention addresses the problem of providing an end effector, etc., with which it is possible to resolve the problem of finger jamming, in which an operation part collides with a surface on which an object is placed and becomes uncontrollable.

[Solution] One embodiment of the present invention provides an end effector. The end effector comprises an operation part, a support body, and a detection surface. The operation part is configured to project toward one end, thereby coming into contact with an object. The support body is configured to flexibly support the operation part so that the position and/or orientation of the operation part is displaced when force generated due to contact between the operation part and the object is received. The detection surface is located at the other end of the operation part relative to the one end, the detection surface being configured to not come into contact with the object, and the position and/or orientation of the detection surface being displaced together with that of the operation part. In a state in which the end effector is attached to a robot arm, the detection surface is disposed so as to face a sensor that is capable of measuring the position and/or orientation of the detection surface.

## Description

### TECHNICAL FIELD

The present invention relates to an end effector, end effector control device, and gripper control method.

### BACKGROUND ART

Patent Literature 1 discloses a gripper (robot hand) as an example of an end effector. This robot hand includes a hand base, at least one finger, a wrist coupling frame coupled to an end of a robot arm, and a force sensor for detecting the translational force or torque of at least one axis. The hand base is formed by combining a palm-side frame located on the palm side of the robot hand and a back-side frame located on the back side of the robot hand. The force sensor is disposed to be contained in the hand base. One mounting surface of the force sensor is coupled to the wrist connecting frame, and another mounting surface of the force sensor is coupled to the hand base. The force sensor detects a force acting on the hand base and a force acting on the finger.

### Citation List

### Patent Literature

[Patent Literature 1] Japanese Unexamined Patent Application Publication No. 2015-47680

### SUMMARY OF INVENTION

### Problem Solved by Invention

However, in the case of the prior art disclosed in Patent Literature 1, when the placement surface on which an object to be gripped is placed is set arbitrarily, a finger collision problem in which the gripping portion of the gripper collides with the placement surface and the gripper becomes uncontrollable tends to occur. Not only grippers but also end effectors at large have similar problems.

In view of the above circumstances, the present invention provides an end effector and the like capable of solving the finger collision problem, in which an action part collides with the surface on which an object is placed and becomes uncontrollable.

### Solution to Problem

One aspect of the present invention provides an end effector. This end effector includes an action part, a support, and a surface to be detected. The action part is configured to contact an object by protruding toward a one-end side thereof. The support is configured to flexibly support the action part so that at least one of a position and a posture of the action part is displaced when the action part receives a force generated by a contact with the object. The surface to be detected is configured not to contact the object on an other-end side opposite to the one-end side of the action part, and at least one of a position and a posture of the surface to be detected is displaced together with the action part. When the end effector is mounted on the robot arm, the surface to be detected is disposed to face a sensor capable of determining at least one of the position and posture of the surface to be detected.

According to the present disclosure, the finger collision problem, in which the action part collides with the surface on which the object is placed and becomes uncontrollable, can be resolved.

### BRIEF DESCRIPTION OF DRAWINGS

FIG. 1 is a perspective view showing the configuration of an end effector 2 according to the present embodiment.
FIG. 2 is a perspective view showing the state of a robot system 1 on which the end effectors 2 shown in FIG. 1 have yet to be mounted.
FIG. 3 is a perspective view showing the state of the robot system 1 on which the end effectors 2 shown in FIG. 1 have been mounted.
FIG. 4 is a block diagram showing a control device 4 electrically connected to a sensor 3 and a robot arm 5.
FIG. 5 is a schematic diagram showing input parameters used to control a gripper consisting of the pair of end effectors 2.
FIG. 6 is a schematic diagram showing input parameters used to control a gripper consisting of three end effectors 2.
FIGS. 7A to 7D are schematic diagrams showing end effectors 2 including various types of action parts.
FIG. 8 is a plan view of a sensor S1 mainly showing an overview of the configuration of a detection unit S2.

### Description of Embodiments

### [Embodiment]

Now, an embodiment of the present invention will be described with reference to the drawings. Various features described in the embodiment below can be combined with each other.

A program to implement software that appears in the present embodiment may be provided as a computer-readable non-transitory storage medium or may be provided by downloading it from an external server, or the program may be provided such that it is run on an external computer and its functions are implemented on a client terminal (so-called cloud computing).

The term "unit" in the present embodiment includes, for example, a combination of hardware resources implemented by a circuit in a broad sense and software information processing that can be specifically implemented by the hardware resources. Various types of information handled in the present embodiment are represented by, for example, the physical values of signal values representing voltages or currents, high or low signal values as binary bit sets consisting of 0s or 1s, or quantum superpositions (so-called qubits) and can be communicated and subjected to a calculation on a circuit in a broad sense.

The term "circuit in a broad sense" refers to a circuit implemented by combining at least a circuit, circuitry, a processor, memory, and the like appropriately. That is, the term "circuit in a broad sense" includes an application-specific integrated circuit (ASIC), a programmable logic device (e.g., a simple programmable logic device (SPLD), a complex programmable logic device (CPLD), a field programmable gate array (FPGA)), and the like.

### 1. Hardware Configuration

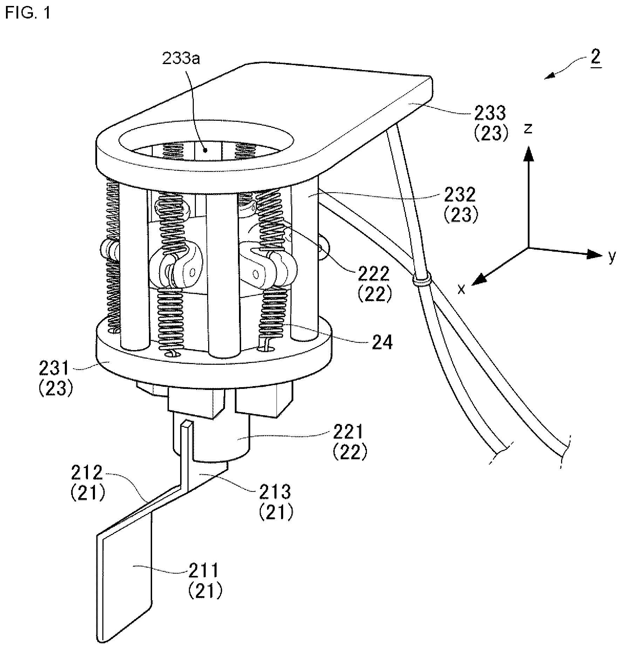

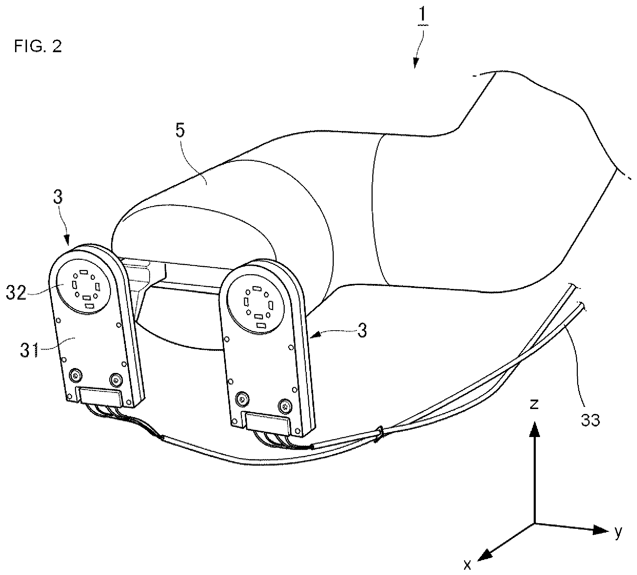

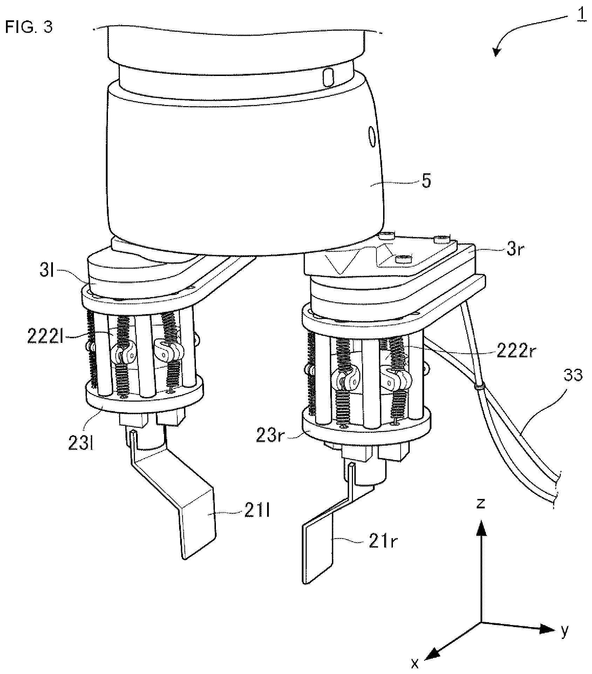

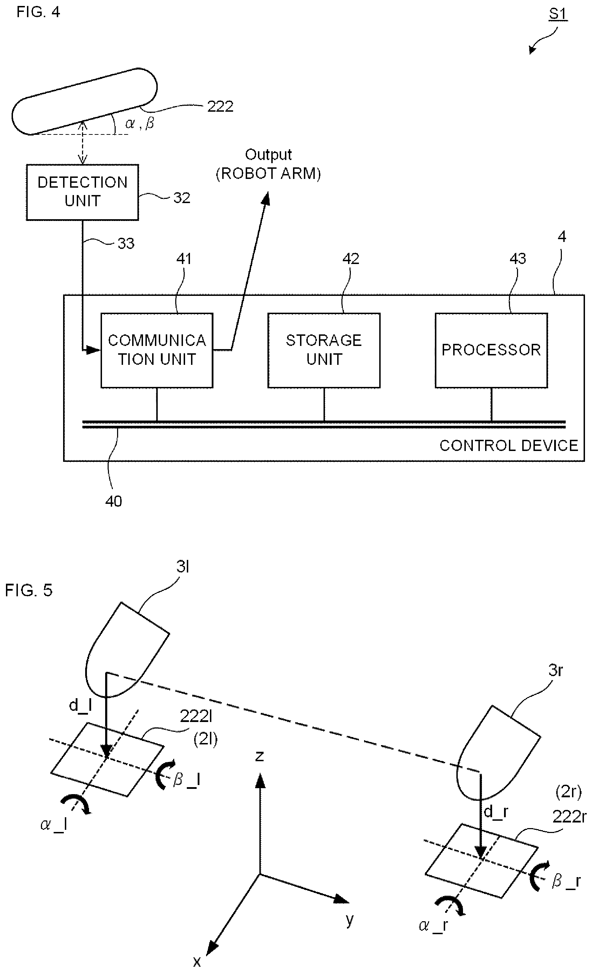

The hardware configuration of a robot system 1 according to the present embodiment will be described in this section. FIG. 1 is a perspective view showing the configuration of an end effector 2 according to the present embodiment. FIG. 2 is a perspective view showing the state of the robot system 1 on which the end effectors 2 shown in FIG. 1 have yet to be mounted. FIG. 3 is a perspective view showing the state of the robot system 1 on which the end effectors 2 shown in FIG. 1 have been mounted. FIG. 4 is a block diagram showing a control device 4 electrically connected to a sensor 3 and a robot arm 5.

As shown in FIGS. 3 and 4, the robot system 1 includes the end effectors 2, sensors 3, control device (apparatus) 4, and robot arm 5.

### (End Effector 2)

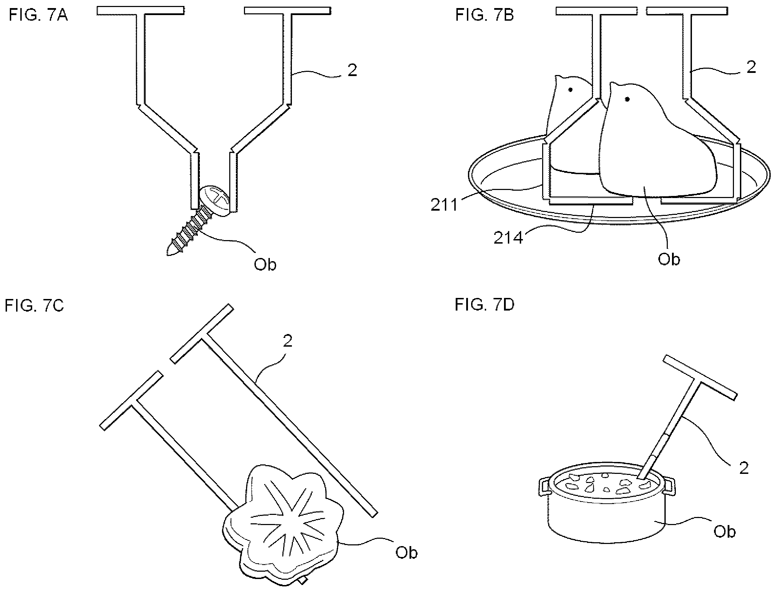

The end effectors 2 are mounted on the robot arm 5, and the robot arm 5 causes the end effectors 2 to perform a desired task by controlling their position and posture. Preferably, the end effectors 2 are configured to be detachable from the sensors 3 located at the ends of the robot arm 5, as shown in FIGS. 1 to 3. The attaching means is not limited to particular means. For example, the end effectors 2 may be screwed to the sensors 3. Examples of the desired task include picking, stirring or the like of various objects Ob (see FIG. 7). That is, the end effectors 2 may function as a gripper configured to grip an object.

As shown in FIG. 1, the end effector 2 includes a gripping claw 21, which is an example of the action part, a body 22 to be detected including at least a surface 222 to be detected, a support 23, and an elastic member 24. The gripping claw 21, which is an example of the action part, is configured to contact the object by protruding toward a one-end side thereof. As used herein, the term "one-end side" refers to a side located in a -z direction in a coordinate system shown in FIG. 1. On the other hand, a side located in a +z direction may be referred to as an other-end side thereof. The shown coordinate system will be described in more detail later.

In FIG. 1, the single gripping claw 21 of the single end effector 2 is shown. On the other hand, in FIG. 3, multiple end effectors 2 are mounted on the robot arm 5 so that the object is gripped by multiple gripping claws 21. In other words, the action part is the gripping claw 21, and when multiple end effectors 2 are mounted on the robot arm 5, the gripping claws 21 of the end effectors are configured to grip the object. Hereafter, the two gripping claws 21 of two end effectors 2 will be described as a gripper capable of gripping the object. Specifically, each gripping claw 21 as a whole is a thin flat plate having a roughly N-shape. Preferably, the gripping claws 21 are made of, for example, metal, are rigid, and have an non-deformable shape. The front end 211 of each gripping claw 21 is a portion that directly contacts the object, and extends along the z-axis. A central portion 212 connected to the front end 211 is bent with respect to the front end 211 and extends with at least a y-axis-direction component. A rear end 213 connected to the central portion 212 is bent with respect to the central portion 212 and extends along the z-axis, as does the front end 211.

The body 22 to be detected is a member including at least the surface 222 to be detected. Here, a claw-fixed portion 221 and the surface 222 to be detected are shown as the body 22 to be detected. The claw-fixed portion 221 has the above-mentioned gripping claw 21 fixed thereto. The claw-fixed portion 221 is inserted through a hole (not shown) formed in a flat plate 231 of the support 23 (to be discussed later) and extends on the other-end side. The surface 222 to be detected, which is a target to be detected by the sensor 3 (to be discussed later), is the surface on the other-end side of the object 22 to be detected. In other words, as shown in FIG. 3, when the end effectors 2 are mounted on the robot arm 5, the surfaces 222 to be detected are disposed to face the sensors 3 capable of determining at least one of the positions and postures of the surfaces 222.

The bodies 22 to be detected are supported by the supports 23 with the elastic members 24 therebetween. Each elastic member 24 may consist of, for example, multiple springs. Each support 23 includes the flat plate 231, multiple posts 232, and a flat plate 233 and is mounted by fixing the flat plate 233 to the sensor 3 located at an end of the robot arm 5. The flat plate 231 and flat plate 233 are disposed side by side in the z-axis direction and have a roughly parallel relationship. The flat plate 231 and flat plate 233 are connected to each other by the posts 232. The flat plate 233 is provided with a hole 233a so that the sensor 3 (to be discussed later) can detect the surface 222 to be detected.

While the support 23 is fixedly disposed on the robot arm 5, the body 22 to be detected supported by the support 23 with the elastic member 24 therebetween is configured such that at least one of the position and posture of the body 22 is displaced when a force is applied to the body 22. That is, since the body 22 to be detected is connected to the gripping claw 21, which is the action part, the body 22 to be detected is configured such that at least one of the position and posture of the gripping claw 21 and body 22 can be displaced by a force generated when the gripping claw 21 contacts the object. In other words, the support 23 is configured to flexibly support the gripping claw 21 (an example of the action part) so that at least one of the position and posture of the gripping claw 21 is displaced when the gripping claw 21 receives a force generated by a contact with the object. The surface 222 to be detected is configured not to contact the object on the other-end side opposite to the one-end side of the gripping claw 21 and is configured such that at least one of the position and posture of the surface 222 is displaced together with the gripping claw 21.

Preferably, the surface 222 to be detected is configured such that its position can be displaced by 0.01 mm or more. Specifically, for example, the amount of displacement is 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, 8.5, 9, 9.5, or 10 mm and may be in the range between any two of the values illustrated above. Since the body 22 to be detected is supported by the support 23 with the elastic member 24 therebetween, the amount of displacement of this order can be obtained. By using the sensor 3 capable of determining the amount of displacement of such an order rather than a general force sensor, the end effector 2 can be controlled as desired and thus the finger collision problem can be solved. This will be described in more detail later.

Note that in FIG. 3, the end effector 2 located on the left side is shown as an end effector 2l and the end effector 2 located on the right side is shown as an end effector 2r. Similarly, components related to the left end effector 2l are given 1 at the end of the sign thereof, and components related to the right end effector 2r are given r at the end of the sign thereof. Also, in FIGS. 1 to 3, an xyz coordinate system is shown. The direction in which the end effectors 2l and 2r are disposed side by side is defined as a y-axis direction. The direction in which the surfaces 222 to be detected and the sensors 3 (to be discussed later) face each other is defined as a z-axis direction. A direction perpendicular to a plane defined by the y-axis and z-axis is defined as an x-axis direction. Even when the postures of the end effectors 2 are displaced due to rotational motion, these definitions shall remain the same.

### (Sensor 3)

Each sensor 3 includes a housing 31 and a detection unit 32 and is configured to determine the distance and posture (angle) of the surface 222 to be detected with respect to the detection unit 32. Details of the sensor 3 are not limited as long as the sensor 3 has characteristics as described above. The housing 31 has a roughly flat shape and, preferably, has the same or similar shape as the flat plate 233 of the end effector 2. When mounting the end effector 2 on the robot arm 5, the flat plate 233 of the end effector 2 having the same or similar shape as the housing 31 of the sensor 3 is mounted on the housing 31. The sensor 3 detects the surface 222 to be detected located inside the support 23 through the hole 233a formed in the flat plate 233. According to such a configuration, the end effector 2 functions as an attachment to the sensor 3 and fixes the positional relationship between the surface 222 to be detected (to be discussed later) and the sensor 3 and further increases accuracy. The sensor 3 is connected to the communication unit 41 of the control device 4 shown in FIG. 4 through wiring 33. That is, electrical physical quantities such as electric current, electric charge, or voltage outputted from the sensor 3 are inputted to the control device 4 through the wiring 33 and communication unit 41.

Note that in FIG. 3, the sensor 3 located on the left side is shown as a sensor 3l and the sensor 3 located on the right side is shown as a sensor 3r.

### (Control device 4)

Next, the control device 4 will be described. The control device 4 is a device or circuit configured to control the operation of the sensors 3 and the robot arm 5 (to be discussed later), for example, a computer or microcontroller. The control device 4 includes the communication unit 41, a storage unit 42, and a processor 43, and these components are electrically connected inside the control device 4 through a communication bus 40. The respective components will be further described.

The communication unit 41 is configured to transmit various electrical signals from the control device 4 to external components. The communication unit 41 is also configured to receive various electrical signals transmitted from the external components to the control device 4. Specifically, the communication unit 41 receives electrical physical quantities corresponding to spatial physical quantities detected by the detection units 32 (input parameters of the surfaces 222 to be detected) through the wiring 33. The communication unit 41 controls mechanical parameters such as the position and posture of the robot arm 5 on the basis of the input parameters determined by the sensors 3. Preferably, the communication unit 41 has a network communication function and thus communicates various types of information between the control device 4 and external devices through a network such as the Internet.

The storage unit 42 is storing various types of information defined by the foregoing description. The storage unit 42 can be implemented, for example, as a storage device such as a solid-state drive (SSD) that stores various programs or the like related to the control device 4 executed by the processor 43, or as memory such as random access memory (RAM) that stores temporarily required information (arguments, arrays, etc.) related to program calculations. The storage unit 42 is storing various programs, variables, and the like related to the control device 4 executed by the processor 43.

The processor 43 is, for example, a central processing unit (CPU) (not shown). The processor 43 implements various functions related to the control device 4 by reading a predetermined program stored in the storage unit 42. That is, when the processor 43, which is an example of hardware, specifically performs information processing using the software stored in the storage unit 42, the functional units of the processor 43 are implemented. Note that the processor 43 does not have to be a single processor and function-specific multiple processors 43 may be provided. Or, a combination of these may be used.

### (Robot Arm 5)

The robot arm 5 has multiple degrees of freedom and is configured to control its mechanical parameters. Preferably, the robot arm 5 has three translational degrees of freedom and three rotational degrees of freedom. That is, the robot arm 5 is configured to control the mechanical parameters of the end effectors 2 mounted on its ends. The mechanical parameters of the robot arm 5 are controlled by the processor 43 of the control device 4. The end effectors 2 are mounted on the robot arm 5. In other words, the control device 4 is a device that controls the end effectors 2, and includes the processor 43 (an example of the controller). The processor 43 controls the mechanical parameters of the gripping claws 21 of the end effectors 2 on the basis of the results of the determinations made by the sensors 3. Preferably, the mechanical parameters include at least one of the position and posture. The control device 4 thus configured is able to feedback-control the positions or postures of the end effectors 2. Preferably, the mechanical parameters include at least one of velocity and acceleration. The control device 4 thus configured is able to feedback-control the velocity or acceleration of the end effectors 2. A method for controlling the robot arm 5 will be described in detail later.

### 2.Control Method

A method for controlling the robot arm 5 having the end effectors 2 mounted thereon will be described in this section. In this example, this control method is a method for controlling the end effectors 2 (gripper) including the multiple gripping claws 21. This control method includes the following steps. First, in an acquisition step, the input parameters of the surfaces 222 to be detected corresponding to the gripping claws 21 are acquired for each gripping claw 21. As described above, the input parameters include at least one of the positions and postures of the surfaces 222 to be detected. Then, in a control step, the mechanical parameters of the gripping claws 21 are controlled on the basis of the sum of or the difference between the input parameters.

### 2.1 Gripper Consisting of Pair of End Effectors 2

FIG. 5 is a schematic diagram showing the input parameters used to control the gripper consisting of the pair of end effectors 2. As shown in FIG. 5, the sensors 3l detect the mechanical parameters of the surfaces 222l to be detected of the end effectors 2l. Preferably, the mechanical parameters here include the distance d_l between the sensor 3l and the surface 2221 to be detected, the inclination angle α_l around the x-axis of the surface 2221 to be detected, and the inclination angle β_l around the y-axis of the surface 2221 to be detected. Similarly, the sensor 3r detects the mechanical parameters of the surface 222r to be detected of the end effector 2r. Preferably, the mechanical parameters here include the distance d_r between the sensor 3r and the surface 222r to be detected, the inclination angle α_r around the x-axis of the surface 222r to be detected, and the inclination angle β_r around the y-axis of the surface 222r to be detected.

Table 1 is a table showing the control method in each axis direction related to the translation or rotation of the gripper consisting of the pair of end effectors 2. Preferably, control in each axis direction related to the translation or rotation shown in Table 1 is performed successively and simultaneously. Each item will be described in detail below.

**[Table 1]**

| Type of motion | Control calculation |
|---|---|
| Translational motion in x -axis direction | **Δx = Gₓ(βₗ + βᵣ)** |
| Translational motion in y-axis direction | **Δy = G_{y}(αₗ + αᵣ)** |
| Translational motion in z-axis direction | **Δz = G_{z}(dₗ + dᵣ - 2d_{ref})** |
| Rotational motion around x -axis | **ΔRₓ = G_{Rx}(dₗ - dᵣ)** |
| Rotational motion around z-axis | **ΔR_{z} = G_{Rz}(βₗ - βᵣ)** |

### (Translational Motion in x-Axis Direction)

It is assumed that when a force in the x-axis direction is being applied to the gripping claw 21l of the end effector 2l and the gripping claw 21r of the end effector 2r, the ends of the robot arm 5 are translationally moved in the x-axis direction so that the force is relaxed. When such a force in the x-axis direction is applied, the gripping claws 21l and 21r are rotated around the y-axis and lifted. For this reason, the processor 43 obtains the sum of the inclination angle β_l and the inclination angle β_r as an input parameter and outputs a control value obtained by multiplying the input parameter by a gain G_x. By sequentially performing such control at a predetermined control rate, the processor 43 is able to translationally move the positions of the end effectors 2l and 2r in the x-axis direction without having to use a force sensor.

### (Translational Motion in y-Axis Direction)

It is assumed that when a force in the y-axis direction is being applied to the gripping claw 21l of the end effector 2l and the gripping claw 21r of the end effector 2r, the ends of the robot arm 5 are translationally moved in the y-axis direction so that the force is relaxed. When such a force in the y-axis direction is applied, the gripping claws 21l and 21r are rotated around the x-axis and lifted. For this reason, the processor 43 obtains the sum of the inclination angle α_l and the inclination angle α_r as an input parameter and outputs a control value obtained by multiplying the input parameter by a gain G_y. By sequentially performing such control at a predetermined control rate, the processor 43 is able to translationally move the positions of the end effectors 2l and 2r in the y-axis direction without having to use a force sensor.

### (Translational Motion in z-Axis Direction)

It is assumed that when a force in the z-axis direction is being applied to the gripping claw 21l of the end effector 2l and the gripping claw 21r of the end effector 2r, the ends of the robot arm 5 are translationally moved in the z-axis direction so that the force is relaxed. When such a force in the z-axis direction is applied, the gripping claws 21l and 21r are lifted or pulled. Thus, the distance d_l between the surface 2221 to be detected and the detection unit 32l and the distance d_r between the surface 222r to be detected and the detection unit 32r are displaced. For this reason, the processor 43 obtains, as an input parameter, a value obtained by adding an offset to the sum of the distance d_l and distance d_r as appropriate and outputs a control value obtained by multiplying the input parameter by a gain G_z. Note that the processor 43 may perform control, for example, so that a force is intentionally applied to the placement surface, by adding the offset. d_ref is an offset that is preset for each end effector 2 and has a distance dimension. Since the end effectors 2l and 2r exist, a value obtained by multiplying this offset by two is subtracted from the sum of the distances d_l and d_r. By sequentially performing such control at a predetermined control rate, the processor 43 is able to translationally move the positions of the end effectors 2l and 2r in the z-axis direction without having to use a force sensor.

In other words, in the control step of the control method, the mechanical parameters related to translational motion of the gripping claws 21 are controlled on the basis of the sum of the input parameters. The processor 43 thus configured is able to control the end effectors 2 (gripper) with the translational degrees of freedom.

### (Rotational Motion around x-Axis)

It is assumed that when a force in the z-axis direction is being applied to one of the gripping claw 21l of the end effector 2l and the gripping claw 21r of the end effector 2r, the end of the robot arm 5 is rotationally moved around the x-axis so that the force is relaxed. When such a force in the z-axis direction is applied, one of the gripping claws 21l and 21r is lifted or pulled. Thus, a difference occurs between the distance d_l between the surface 2221 to be detected and the detection unit 32l and the distance d_r between the surface 222r to be detected and the detection unit 32r. For this reason, the processor 43 obtains the difference between distance d_l and distance d_r as an input parameter and outputs a control value obtained by multiplying the input parameter by a gain G_Rx. By sequentially performing such control at a predetermined control rate, the processor 43 is able to rotationally move the position of the end effector 2l or 2r around the x-axis without having to use a force sensor. The same applies also to when forces in the mutually opposite z-axis directions are being applied to the gripping claw 21l of the end effector 2l and the gripping claw 21r of the end effector 2r.

### (Rotational Motion around z-Axis)

It is assumed that when a force in the x-axis direction is being applied to one of the gripping claw 21l of the end effector 2l and the gripping claw 21r of the end effector 2r, the end of the robot arm 5 is rotationally moved around the z-axis so that the force is relaxed. When such a force in the x-axis direction is applied, one of the gripping claws 21l and 21r is rotated around the y-axis and lifted. Thus, a difference occurs between the inclination angles β_l and β_r. For this reason, the processor 43 obtains the difference between the inclination angle β_l and the inclination angle β_r as an input parameter and outputs a control value obtained by multiplying the input parameter by a gain G_Rz. By sequentially performing such control at a predetermined control rate, the processor 43 is able to rotationally move the position of the end effector 2l or 2r around the z-axis without having to use a force sensor. The same applies also to when forces in the mutually opposite x-axis directions are being applied to the gripping claw 21l of the end effector 2l and the gripping claw 21r of the end effector 2r.

In other words, in the control step of the control method, the mechanical parameters related to rotational motion of the gripping claws 21 are controlled on the basis of the difference between the input parameters. The processor 43 thus configured is able to control the end effectors 2 (gripper) with the rotational degrees of freedom.

### 2.2 Gripper Consisting of Three End Effectors 2

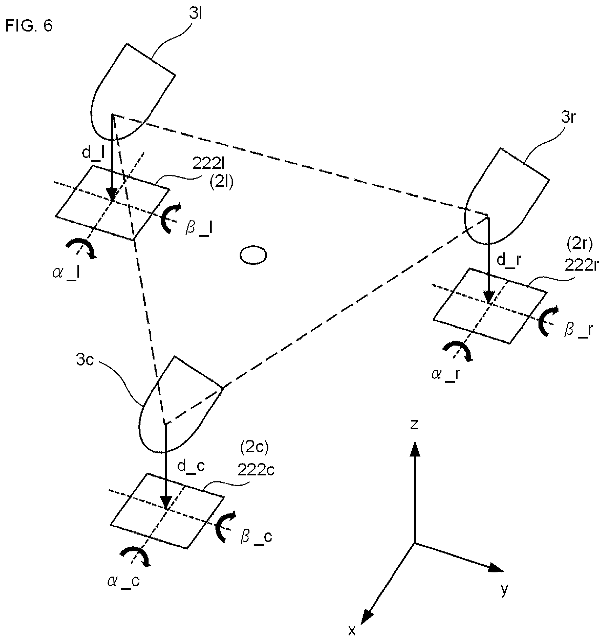

A gripper consisting of three or more end effectors 2 may be implemented. FIG. 6 is a schematic diagram showing input parameters used to control a gripper consisting of three end effectors 2. This gripper includes an end effector 2c in addition to the end effectors 2l and 2r described above. Hereafter, components included in the end effector 2c will be denoted by signs having c at the end thereof. A sensor 3c is configured to detect the surface 222c to be detected of the end effector 2c. The end effectors 2l and 2r are disposed side by side in the y-axis direction. The end effector 2c is positioned in the position of an apex of an equilateral triangle, as are the end effectors 2l and 2r. Table 2 is a table showing the control method in each axis direction related to the translation or rotation of the gripper consisting of the three end effectors 2. Preferably, control in each axis direction related to the translation or rotation shown in Table 2 is performed successively and simultaneously. Each item will be described in detail below.

**[Table 2]**

| Type of motion | Control calculation |
|---|---|
| Translational motion in x -axis direction | **Δx = Gₓ(βₗ + βᵣ + β_{c})** |
| Translational motion in y-axis direction | **Δy = G_{y}(αₗ + αᵣ + α_{c})** |
| Translational motion in z-axis direction | **Δz = G_{z}(dₗ + dᵣ + d_{c} - 3d_{ref})** |
| Rotational motion around x -axis | **ΔRₓ = G_{Rx} (dₗ - dᵣ)** |
| Rotational motion around y-axis | **ΔR_{y} = G_{Rx}{2d_{c} - (dₗ + dᵣ)}** |
| Rotational motion around z-axis | **ΔR_{z} = G_{Rz}{(βₗ - βᵣ) + (αᵣ - α_{c}) + (αₗ - α_{c})}** |

### (Translational Motion in x-Axis Direction)

It is assumed that when a force in the x-axis direction is being applied to the gripping claw 21l of the end effector 2l, the gripping claw 21r of the end effector 2r, and the gripping claw 21c of the end effector 2c, the ends of the robot arm 5 are translationally moved in the x-axis direction so that the force is relaxed. When such a force in the x-axis direction is applied, the gripping claws 21l, 21r, and 21c are rotated around the y-axis and lifted. For this reason, the processor 43 obtains the sum of the inclination angle β_l, inclination angle β_r, and the inclination angle β_c as an input parameter and outputs a control value obtained by multiplying the input parameter by the gain G_x. By successively performing such control at a predetermined control rate, the processor 43 is able to translationally move the positions of the end effectors 2l, 2r, and 2c in the x-axis direction without having to use a force sensor.

### (Translational Motion in y-Axis Direction)

It is assumed that when a force in the y-axis direction is being applied to the gripping claw 21l of the end effector 2l, the gripping claw 21r of the end effector 2r, and the gripping claw 21c of the end effector 2c, the ends of the robot arm 5 are translationally moved in the y-axis direction so that the force is relaxed. When such a force in the y-axis direction is applied, the gripping claws 21l, 21r, and 21c are rotated around the x-axis and lifted. For this reason, the processor 43 obtains the sum of the inclination angle α_l, the inclination angle α_r, and the inclination angle α_c as an input parameter and outputs a control value obtained by multiplying the input parameter by the gain G_y. By successively performing such control at a predetermined control rate, the processor 43 is able to translationally move the positions of the end effectors 2l, 2r, and 2c in the y-axis direction without having to use a force sensor.

### (Translational Motion in z-Axis Direction)

It is assumed that when a force in the z-axis direction is being applied to the gripping claw 21l of the end effector 2l, the gripping claw 21r of the end effector 2r, and the gripping claw 21c of the end effector 2c, the ends of the robot arm 5 are translationally moved in the z-axis direction so that the force is relaxed. When such a force in the z-axis direction is applied, the gripping claws 21l, 21r, and 21c are lifted or pulled. Thus, the distance d_l between the surface 2221 to be detected and the detection unit 32l, the distance d_r between the surface 222r to be detected and the detection unit 32r, and the distance d_c between the surface 222c to be detected and the detection unit 32c are displaced. For this reason, the processor 43 obtains, as an input parameter, a value obtained by adding an offset to the sum of the distance d_l, the distance d_r, and the distance d_c as appropriate and outputs a control value obtained by multiplying the input parameter by the gain G_z. d_ref is an offset that is preset for each end effector 2 and has a distance dimension. Since the end effectors 2l, 2r, and 2c exist, a value obtained by multiplying this offset by three is subtracted from the sum of the distance d_l and the distance d_r. By successively performing such control at a predetermined control rate, the processor 43 is able to translationally move the positions of the end effectors 2l, 2r, and 2c in the z-axis direction without having to use a force sensor.

### (Rotational Motion around x-Axis)

The description is the same as that in the previous section and therefore is omitted.

### (Rotational Motion around y-Axis)

It is assumed that when a force in the z-axis direction is being applied to one of the gripping claw 21l of the end effector 2l, the gripping claw 21r of the end effector 2r, and the gripping claw 21c of the end effector 2c, the end of the robot arm 5 is rotationally moved around the y-axis so that the force is relaxed. When such a force in the z-axis direction is applied, one of the gripping claws 21l and 21r and the gripping claw 21c are lifted or pulled. Thus, a difference occurs between the sum of the distance d_l between the surface 2221 to be detected and the detection unit 32l and the distance d_r between the surface 222r to be detected and the detection unit 32r and the distance d_c between the surface 222c to be detected and the detection unit 32c. For this reason, the processor 43 obtains the difference between the sum of the distance d_l and distance d_r and the distance d_c as an input parameter and outputs a control value obtained by multiplying the input parameter by a gain G_Ry. By successively performing such control at a predetermined control rate, the processor 43 is able to rotationally move the positions of the end effectors 2l and 2r or the end effector 2c around the x-axis without having to use a force sensor.

### (Rotational Motion around z-Axis)

It is assumed that when a force in the x-axis direction is being applied to one of the gripping claw 21l of the end effector 2l and the gripping claw 21r of the end effector 2r or when a force in the y-axis direction is being applied to the gripping claw 21c of the end effector 2c, the end of the robot arm 5 is rotationally moved around the z-axis so that the force is relaxed. When a force in the x-axis direction is applied to one of the gripping claws 21l and 21r, the gripping claw 21l or 21r is rotated around the y-axis and lifted. Thus, a difference occurs between the inclination angle β_l and the inclination angle β_r. Or, when a force in the y-axis direction is applied to the gripping claw 21c, the gripping claw 21c is rotated around the x-axis and lifted. Thus, a difference occurs between the inclination angle α_l or the inclination angle α_r and the inclination angle α_c. For this reason, the processor 43 obtains the sum of the above conceivable differences as an input parameter and outputs a control value obtained by multiplying the input parameter by the gain G_Rz. By successively performing such control at a predetermined control rate, the processor 43 is able to rotationally move the position of the end effector 2l, 2r, or 2c around the z-axis without having to use a force sensor.

The foregoing is summarized as follows: each end effector according to the present embodiment includes the gripping claw 21 (an example of the action part), the support 23, and the surface 222 to be detected; the gripping claw 21 is configured to contact the object by protruding toward the one-end side; the support 23 is configured to flexibly support the gripping claw 21 so that at least one of the position and posture of the gripping claw 21 is displaced when the gripping claw 21 receives a force generated by a contact with the object; the surface 222 to be detected is configured not to contact the object on the other-end side opposite to the one-end side of the gripping claw 21, and at least one of the position and posture of the surface 222 to be detected is displaced together with the gripping claw 21; and when the end effector 2 is mounted on the robot arm 5, the surface 222 to be detected is disposed to face the sensor capable of determining at least one of the position and posture of the surface 222 to be detected. In the case of the conventional method using the force sensor, the finger collision problem occurs when a force exceeding the range of values determinable by the force sensor occurs. According to the configuration of the present embodiment, at least one of the position and posture of the gripping claw 21 (action part) is flexibly displaced, and the displaced position or posture is determined by the sensor 3 having a sufficiently wide determination range. Thus, the finger collision problem, in which the gripping claw 21 (action part) collides with the surface on which the object is placed and becomes uncontrollable, can be solved.

In another aspect, the processor 43 acquires the input parameters of the surfaces 222 to be detected corresponding to the gripping claws 21 for each gripping claw 21. The input parameters include at least one of the position and posture of each surface 222 to be detected. The processor 43 is configured to control the mechanical parameters of the gripping claws 21 on the basis of the sum of or the difference between the input parameters. Preferably, the processor 43 controls the mechanical parameters related to translational motion of the gripping claws 21 on the basis of the sum of the input parameters. Preferably, the processor 43 controls the mechanical parameters related to rotational motion of the gripping claws 21 on the basis of the difference between the input parameters. The processor 43 thus configured performs feedback control using simple calculated values and thus allows the end effectors 2 (gripper) to stably perform a picking task without causing the finger collision problem. It also allows the end effectors 2 to perform difficult tasks, such as one-by-one picking of multiple objects Ob in bulk.

### [Others]

Further creativity may be applied to the robot system 1 according to the present embodiment.

While, in the above embodiment, the grippers consisting of the multiple end effectors 2 have been described, various forms of end effectors 2, including grippers, may be implemented. FIGS. 7A to 7D are schematic diagrams showing end effectors 2 including various types of action parts. A gripper having a tapered shape like a tweezer is shown in FIG. 7A and is suitable for a task of picking objects in bulk one by one. A gripper extending in an inverted V-shape is shown in FIG. 7B and is provided with bottom holding portions 214 ahead of front ends 211. Such a shape is suitable for a task of picking up and gripping an object placed on the placement surface. A gripper consisting of a pair of linearly formed end effectors 2 is shown in FIG. 7C and is suitable for tasks such as gripping of an object such as food, as is done using chopsticks. A stirrer consisting of one linearly formed end effector 2 is shown in FIG. 7D and is suitable for a task of stirring an object such as food as needed.

When implementing a single end effector 2, such as the stirrer described above, the mechanical parameters of the action part may be controlled on the basis of at least one of the position and posture of the single surface 222 to be detected of the end effector 2. In such a case, control with three translational degrees of freedom, or control with one translational degree of freedom and two rotational degrees of freedom can be performed. Table 3 is a table showing a method for controlling three translational degrees of freedom of one end effector 2. Table 4 is a table showing a method for controlling a single end effector 2 with one translational degree of freedom and two rotational degrees of freedom. Preferably, control in each axis direction shown in Table 3 or Table 4 is performed successively and simultaneously. Preferably, the distance d between the sensor 3 and the surface 222 to be detected, the inclination angle α around the x-axis of the surface 222 to be detected, and the inclination angle β around the y-axis of the surface 222 to be detected are used as input parameters for control. G_x, G_y, G_z, G_Rx, and G_Ry are gains in each control, and d_ref is a preset offset having a distance dimension.

**[Table 3]**

| Type of motion | Control calculation |
|---|---|
| Translational motion in x -axis direction | **Δx = Gₓβ** |
| Translational motion in y-axis direction | **Δy = G_{y}α** |
| Translational motion in z-axis direction | **Δz = G_{z}(d - d_{ref})** |

**[Table 4]**

| Type of motion | Control calculation |
|---|---|
| Rotational motion around x -axis | **ΔRₓ = G_{Rx}α** |
| Rotational motion around y-axis | **ΔR_{y} = G_{Rx}β** |
| Translational motion in z-axis direction | **Δz = G_{z}(d - d_{ref})** |

By successively performing control shown in the items of each Table described above at a predetermined control rate, the positions of the end effectors can be moved translationally or rotationally without having to use a force sensor.

While, in the above embodiment, the end effectors 2 are detachable from the sensors 3 mounted on the ends of the robot arm 5, the end effectors 2 may further include the sensors 3. Such a configuration in which the sensors 2 are included in the end effectors 3 fixes the positional relationships between the surfaces 222 to be detected and the sensors 3 and further increase accuracy.

The sensors 3 are not limited to a particular type of sensors, and a sensor S1 (to be detailed below), for example, may be employed. The sensor S1 is a sensor for determining an object. The object is, for example, the surface 222 to be detected described above. More specifically, the sensor S1 is configured to determine spatial physical quantities related to the reference surface of the sensor S1 and the object. Preferably, the spatial physical quantities here include at least the distance d between the reference plane and the object and the angles α and β of the object with respect to the reference plane (parameters representing a three-dimensional posture). Particularly preferably, the distance d is a close range, for example, 50 mm or less. Specifically, for example, the distance d is 50, 49, 48, 47, 46, 45, 44, 43, 42, 41, 40, 39, 38, 37, 36, 35, 34, 33, 32, 31, 30, 29, 28, 27, 26, 25, 24, 23, and 22, 21,20, 19, 18, 17, 16, 15, 14, 13, 12, 11, 10, 9, 8, 7, 6, 5, 4, 3, 2, 1, or 0 mm and may be in the range between any two of the values illustrated above. According to such a mode, it is able to determine the distance d to the object and the angles α and β and can be used in various scenes such as picking or inspection of objects. It is also able to accurately grasp an object located at a very short distance.

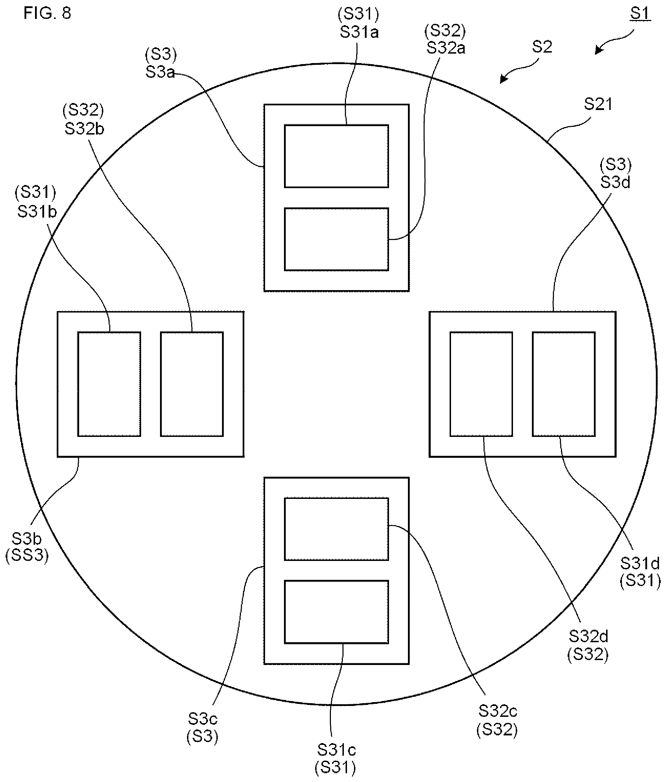

FIG. 8 is a plan view of the sensor S1 according to the present embodiment that mainly shows an overview of the configuration of a detection unit S2. As shown in FIG. 8, the sensor S1 mainly includes the detection unit S2. the detection unit S2 includes a substrate S21, and multiple light-receiving/emitting blocks S3 disposed on the substrate S21. The respective components will be further described below.

The substrate S21 constitutes the housing of the sensor S1. In the present embodiment, the substrate S21 has, for example, an approximately circular shape and is formed as a flat plate. However, this is only illustrative and is not limiting. Preferably, the substrate S21 is made of, for example, a material that is black and lackluster and has low reflectivity. The substrate S21 has the light-receiving/emitting blocks S3 thereon.

As shown in FIG. 8, the multiple light-receiving/emitting blocks S3 are disposed on the substrate S21. A light-emitting element(s) S31 and a light-receiving element(s) S32 are disposed in each light-receiving/emitting block S3. In the present embodiment, one light-emitting element S31 and one light-receiving element S32 are disposed in one light-receiving/emitting block S3. In other words, the light-receiving element S32 and the corresponding light-emitting element S31 are adjacent to each other to form the light-receiving/emitting block S3. The multiple light-receiving/emitting blocks S3 are disposed on the substrate S21.

The number of light-emitting elements S31 is preferably 2 to 30, more preferably 2 to 10, and most preferably 2 to 4. Specifically, for example, the number of light-emitting elements S31 may be 2, 3, 4, 5, 6, 7, 8, 9, 10, 11, 12, 13, 14, 15, 16, 17, 18, 19, 20, 21, 22, 23, 24, 25, 26, 27, 28, 29, or 30 and may be in the range between any two of the numbers illustrated above.

The number of light-receiving/emitting blocks S3 is preferably two or more, more preferably three or more. In the present embodiment, four light-receiving/emitting blocks S3a, S3b, S3c, and S3d are provided. As shown in FIG. 8, more preferably, the light-receiving/emitting blocks S3 are disposed annularly and at equal intervals on the substrate S21. In other words, the light-receiving/emitting blocks S3 are disposed symmetrically with respect to the substrate S21. Specifically, a light-emitting element S31a and a light-receiving element S32a are disposed in the light-receiving/emitting block S3a, a light-emitting element S31b and a light-receiving element S32b are disposed in the light-receiving/emitting block S3b, a light-emitting element S31c and a light-receiving element S32c are disposed in the light-receiving/emitting block S3c, and a light-emitting element S31d and a light-receiving element S32d are disposed in the light-receiving/emitting block S3d. Such a configuration makes photocurrents (an example of electrical physical quantities) based on the multiple light-receiving elements S32 symmetrical and further increases the accuracy of the sensor S1. In other words, the light-receiving elements S32 are the same in number as the light-emitting elements S31 and are associated with the light-emitting elements S31 one-to-one. Such a configuration allows the sensor S1 to obtain the photocurrents based on the multiple light-receiving elements S32 and further increases the accuracy of the sensor S1.

As shown in FIG. 8, the light-emitting elements S31 are disposed in different positions on the substrate S21. The light-emitting elements S31 only have to be elements that apply a diffuse light ray to the object. For example, the light-emitting elements S31 are light emitting diodes (LED) and, preferably, infrared LEDs that emit an infrared light ray that is invisible to humans and harmless to human bodies. Of course, the light-emitting elements S31 are not limited to infrared LEDs and may be red LEDs, green LEDs, or blue LEDs. By connecting the positive side of a power supply (not shown) to the anode side of the light-emitting elements S31 that are light emitting diodes as described above, currents flow, resulting in application of diffuse light rays of a specific frequency to the object.

As shown in FIG. 8, the light-receiving elements S32 are disposed on the substrate S21. The light-receiving elements S32 are elements that detect received light rays and in turn generate photocurrents, which are an example of electrical physical quantities. In other words, the light-receiving elements S32 are configured to output photocurrents corresponding to the illuminance of received light rays. Preferably, the illuminance of the light rays and the photocurrents have linear characteristics. Major examples of the light-receiving elements S32 include phototubes, photomultiplier tubes, phototransistors using the internal photoelectric effect of semiconductors, photodiodes, avalanche photodiodes, photoconductive cells, image sensors, and the like. Preferably, the light-receiving elements S32 are photodiodes with wide directivity, or phototransistors obtained by combining such photodiodes and amplifiers.

Each light-receiving element S32 receives, as a main light ray, a reflected light ray L emitted from a light-emitting element S31 belonging to the same light-receiving/emitting block S3 and reflected from the object. The light-receiving element S32 also receives, as crosstalk light rays, reflected light rays L emitted from light-emitting elements S31 belonging to adjacent light-receiving/emitting blocks S3 and reflected from the object. For example, the light-receiving element S32a receives, as a main light ray, a reflected light ray L originating from the light-emitting element S31a and receives, as crosstalk light rays, reflected light rays L originating from the light-emitting elements S31b and S31d. In other words, the light-receiving elements S32 are each configured to receive one of the reflected light rays L originating from the light-emitting elements S31 as a main light ray as well as receive the reflected light rays L other than the main light ray as crosstalk light rays so as to be able to distinguish the crosstalk light rays from the main light ray and to generate photocurrents (an example of electrical physical quantities) corresponding to the reflected light rays L. The reflected light rays L here are light rays emitted from the light-emitting elements S31 and reflected from the object. The spatial physical quantities related to the reference plane of the sensor S1 and the object are determined on the basis of the photocurrents based on the main light rays and crosstalk light rays received distinguishably as described above.

Specifically, the values of the photocurrents or calculated values based on the photocurrents are inputted as input parameters to a trained model stored in the storage unit 42 of the control device 4 (as described above). This trained model is a model previously machine-trained with the relationships between the spatial physical quantities related to the reference plane of the sensor S1 and the object and the values of the photocurrents or the calculated values. The sensor S1 thus configured is singly able to determine the spatial physical quantities of the object without using a separate computer or the like.

The present invention may be provided in aspects below.
(1) An end effector comprising: an action part configured to contact an object by protruding toward a one-end side thereof; a support configured to flexibly support the action part such that at least one of a position and a posture of the action part is displaced when the action part receives a force generated by a contact with the object; and a surface to be detected configured not to contact the object on an other-end side opposite to the one-end side of the action part, at least one of a position and a posture of the surface to be detected being displaced together with the action part, and is disposed, when the end effector is mounted on a robot arm, to face a sensor capable of determining at least one of the position and posture of the surface to be detected.

The end effector thus configured is able to solve the finger collision problem, in which the action part collides with the surface on which the object is placed and becomes uncontrollable.

(2) The end effector according to (1), further configured to be detachable from the sensor located at an end of the robot arm.

The end effector thus configured functions as an attachment to the sensor, fixes the positional relationship between the surface to be detected and the sensor, and further increases accuracy.

(3) The end effector according to (1), further comprising the sensor.

Such a configuration in which the sensor is included in the end effector fixes the positional relationship between the surface to be detected and the sensor and further increases accuracy.

(4) The end effector according to any one of (1) to (3), wherein the surface to be detected is configured such that the position thereof can be displaced by 0.01 mm or more.

By using the sensor capable of determining the amount of displacement of such an order rather than a force sensor, the end effector can be controlled and the finger collision problem can be solved.

(5) The end effector according to any one of (1) to (4), wherein: the action part is a gripping claw(s), and when a plurality of the end effectors are mounted on the robot arm, the gripping claws of the end effectors are configured to grip the object.

Such a configuration provides a gripper capable of performing a task of picking an object placed on the placement surface without causing the finger collision problem.

(6) An apparatus for controlling an end effector, comprising a controller wherein: the end effector being the end effector according to any one of claims 1 to 5; and the controller is configured to control a mechanical parameter(s) of the action part on the basis of a result of a determination made by the sensor.

The device thus configured is able to control the end effector without causing the finger collision problem.

(7) The apparatus according to (6), wherein: the end effector is configured such that: the action part thereof is a gripping claw, and the gripping claws thereof grip the object when a plurality of the end effectors are mounted on the robot arm; and the controller is configured to: acquire input parameters of the surfaces to be detected corresponding to the gripping claws for each of the gripping claws, the input parameters being one of the positions and postures of the surfaces to be detected, and control the mechanical parameters of the gripping claws on the basis of a sum of or a difference between the input parameters.

The device thus configured performs feedback control using simple calculated values and thus allows the gripper to stably perform a picking task without causing the finger collision problem.

(8) The apparatus according to (7), wherein the controller configured to control the mechanical parameter(s) related to translational movement of the gripping claws on the basis of the sum of the input parameters.

The device thus configured is able to control the gripper with the translational degrees of freedom.

(9) The apparatus according to (7) or (8), wherein the controller configured to control the mechanical parameter(s) related to rotational motion of the gripping claws on the basis of the difference between the input parameters.

The device thus configured is able to control the gripper with the rotational degrees of freedom.

(10) The apparatus according to any one of (6) to (9), wherein the mechanical parameter(s) include at least one of a position and a posture.

The device thus configured is able to feedback- control the position or posture of the gripper.

(11) The apparatus according to any one of (6) to (10), wherein the mechanical parameter(s) include at least one of velocity and acceleration.

The device thus configured is able to feedback-control the velocity or acceleration of the gripper.

(12) A method for controlling a gripper comprising a plurality of gripping claws, comprising: an acquisition step of acquiring input parameters of surfaces to be detected corresponding to the gripping claws for each of the gripping claws, the input parameters including at least one of the positions and postures of the surfaces to be detected; and a control step of controlling a mechanical parameter(s) of the gripping claws on the basis of a sum of or a difference between the input parameters.

By using such a method, feedback control is performed using simple calculated values and thus the gripper is able to stably perform a picking task without causing the finger collision problem.

(13) The method according to (12), wherein the control step includes controlling the mechanical parameter(s) related to translational motion of the gripping claws on the basis of the sum of the input parameters.

According to such a method, the gripper is controlled with the translational degrees of freedom.

(14) The method according to (12) or (13), wherein the control step includes controlling the mechanical parameter(s) related to rotational motion of the gripping claws on the basis of the difference between the input parameters.

According to such a method, the gripper is controlled with the rotational degrees of freedom.

(15 )The method according to any one of (12) to (14), wherein the mechanical parameter(s) includes at least one of a position and a posture.

According to such a method, the position or posture of the gripper is feedback-controlled.

(16) The method according to any one of (12) to (15), wherein the mechanical parameter(s) includes at least one of velocity and acceleration.

According to such a method, the velocity or acceleration of the gripper is feedback-controlled.

Of course, this is not limiting.

Finally, while the various embodiments according to the present invention have been described above, the embodiments are only illustrative and are not intended to limit the scope of the invention. The novel embodiments can be carried out in other various aspects, and various omissions, replacements, or changes can be made thereto without departing from the gist of the invention. The embodiments and modifications thereof are included in the scope and gist of the present invention, as well as included in the scope of the invention set forth in the claims and equivalents thereof.

### Description of Sign

1: robot system
2: end effector
2c: end effector
2l: end effector
2r: end effector
21: gripping claw
21c: gripping claw
21l: gripping claw
21r: gripping claw
211: front end
212: central portion
213: rear end
214: bottom holding portion
22: body to be detected
221: claw_fixed portion
222: surface to be detected
222c: surface to be detected
222l: surface to be detected
222r: surface to be detected
23: support
231: flat plate
232: post
233: flat plate
233a: hole
24: elastic member
3: sensor
3c: sensor
3l: sensor
3r: sensor
31: housing
32: detection unit
32c: detection unit
32l: detection unit
32r: detection unit
33: wiring
4: control device
40: communication bus
41: communication unit
42: storage unit
43: processor
5: robot arm
G_Rx: gain
G_Ry: gain
G_Rz: gain
G_x: gain
G_y: gain
G_z: gain
Ob: object
S1: sensor
S2: detection unit
S21: substrate
S3: light receiving/emitting block
S31: light emitting element
S31a: light emitting element
S31b: light emitting element
S31c: light emitting element
S31d: light emitting element
S32: light receiving element
S32a: light receiving element
S32b: light receiving element
S32c: light receiving element
S32d: light receiving element
S3a: light receiving/emitting block
S3b: light receiving/emitting block
S3c: light receiving/emitting block
S3d: light receiving/emitting block
d: distance
d_c: distance
d_l: distance
d_r: distance
α_c: inclination angle
α_l: inclination angle
α_r: inclination angle
β_c: inclination angle
β_l: inclination angle
β_r: inclination angle

## Claims

1. An end effector comprising:
an action part configured to contact an object by protruding toward a one-end side thereof;
a support configured to flexibly support the action part such that at least one of a position and a posture of the action part is displaced when the action part receives a force generated by a contact with the object; and
a surface to be detected
configured not to contact the object on an other-end side opposite to the one-end side of the action part, at least one of a position and a posture of the surface to be detected being displaced together with the action part, and
is disposed, when the end effector is mounted on a robot arm, to face a sensor capable of determining at least one of the position and posture of the surface to be detected.

2. The end effector according to claim 1, further configured to be detachable from the sensor located at an end of the robot arm.

3. The end effector according to claim 1, further comprising the sensor.

4. The end effector according to any one of claims 1 to 3, wherein the surface to be detected is configured such that the position thereof can be displaced by 0.01 mm or more.

5. The end effector according to any one of claims 1 to 4, wherein:
the action part is a gripping claw(s), and
when a plurality of the end effectors are mounted on the robot arm, the gripping claws of the end effectors are configured to grip the object.

6. An apparatus for controlling an end effector, comprising a controller wherein:
the end effector being the end effector according to any one of claims 1 to 5; and
the controller is configured to control a mechanical parameter(s) of the action part on the basis of a result of a determination made by the sensor.

7. The apparatus according to claim 6, wherein:
the end effector is configured such that:
the action part thereof is a gripping claw, and
the gripping claws thereof grip the object when a plurality of the end effectors are mounted on the robot arm; and
the controller is configured to:
acquire input parameters of the surfaces to be detected corresponding to the gripping claws for each of the gripping claws, the input parameters being one of the positions and postures of the surfaces to be detected, and
control the mechanical parameters of the gripping claws on the basis of a sum of or a difference between the input parameters.

8. The apparatus according to claim 7, wherein the controller configured to control the mechanical parameter(s) related to translational movement of the gripping claws on the basis of the sum of the input parameters.

9. The apparatus according to claim 7 or 8, wherein the controller configured to control the mechanical parameter(s) related to rotational motion of the gripping claws on the basis of the difference between the input parameters.

10. The apparatus according to any one of claims 6 to 9, wherein the mechanical parameter(s) include at least one of a position and a posture.

11. The apparatus according to any one of claims 6 to 10, wherein the mechanical parameter(s) include at least one of velocity and acceleration.

12. A method for controlling a gripper comprising a plurality of gripping claws, comprising:
an acquisition step of acquiring input parameters of surfaces to be detected corresponding to the gripping claws for each of the gripping claws, the input parameters including at least one of the positions and postures of the surfaces to be detected; and
a control step of controlling a mechanical parameter(s) of the gripping claws on the basis of a sum of or a difference between the input parameters.

13. The method according to claim 12, wherein the control step includes controlling the mechanical parameter(s) related to translational motion of the gripping claws on the basis of the sum of the input parameters.

14. The method according to claim 12 or 13, wherein the control step includes controlling the mechanical parameter(s) related to rotational motion of the gripping claws on the basis of the difference between the input parameters.

15. The method according to any one of claims 12 to 14, wherein the mechanical parameter(s) includes at least one of a position and a posture.

16. The method according to any one of claims 12 to 15, wherein the mechanical parameter(s) includes at least one of velocity and acceleration.
